# EUROPEAN PATENT APPLICATION

(11) **EP 1 883 019 A1**
(43) Date of publication of application: **30.01.2008**
(21) Application number: 06015552.0
(22) Date of filing: 26.07.2006
(51) Int. Cl.: G06F 17/30, H04L 29/08, H04L 12/18, H04L 12/58

(54) **Method for anonymous communication between end-users over a network**

(71) Applicant: Koninklijke KPN N.V., 2516 CK The Hague (NL)
(72) Inventor: Alberts, Albert Willem, 9745 DH Groningen (NL)
(74) Representative: Wuyts, Koenraad Maria

(57) **Abstract**

A method is disclosed for enabling an end-user or other type of communication party using or residing at an IP based network to on-line select and communicate to another end-user without revealing their identity. The selection of an end-user is performed by an Internet bot that is able to access a profile list comprising one or more characteristics. Also during the phase in which information is transferred between both end-user, the identity of at least one end-user is not known to the other end-user because information is first transferred to the Internet bot and then from the Internet bot to the other end-user.

## Description

### FIELD OF THE INVENTION

The present invention relates to an Internet bot that is used for communication purposes between end-users of a network.

### BACKGROUND OF THE INVENTION

Nowadays Internet bots are commonly used on the Internet. An Internet bot is parlance on the Internet for a software program that is a software agent. The latter is an abstraction that describes software that acts on behalf of a user or other program. An Internet bot interacts with other network services intended for people as if it were a person. One typical use of Internet bots is to gather information. The term Internet bot is derived from the word "robot," reflecting the autonomous character of the Internet bot.

There are different types of Internet bots, such as Internet bots that can install themselves on people's computers for several purposes, and that can be used as remote attack tools. Other types of Internet bots are so-called web crawlers or spiders that are able to recursively gather web-page information, such as the Internet bot used by Google ("GoogleBot"), Internet bots may also be used to interact dynamically with a site in a particular way, as by exploiting or locating arbitrage opportunities for financial gain.

Some Internet bots communicate with other users of internet-based services, via instant messenger (IM), for example, or via Internet Relay Chat (IRC) or another web interface. These so-called chatterbots may allow people to ask questions in plain English and then formulate a proper response. These bots can often handle many tasks, including reporting weather, zip-code information, sports scores, converting currency or other units, etc.

An additional role of IRC, bots may be to lurk in the background of a conversation channel, commenting on certain phrases uttered by the participants (based on pattern matching). This is sometimes used as a help service for new users, or even for mild censorship.

An Internet bot that is used in the Messenger (MSN) environment of Microsoft is the so-called MSNbot. The MSNbot can be used as a web-crawling robot (type of internet bot), applied by Microsoft to supply MSN Search. It collects documents from the web to build a searchable index for the MSN Search engine. The MSNbot is able to perform the same function as Google's Googlebot, and Yahoo!'s slurp.

Another way to use the MSNbot is to let an Internet user communicate with MSNbot. This offers the Internet user, for instance, the possibility to ask questions to the MSNbot on different topics such as science or recreational topics. A question can be sent to the MSNbot using messenger client software. In order to address the MSNbot the Internet user selects the MSNbot from an MSN contact list or a so-called buddy list. Answers from the MSNbot can also be received using the messenger client software. It is also possible that the MSNbot asks questions to the Internet user, for instance to verify or detail a question asked by the Internet user earlier.

However, a drawback of the MSNbot and similar bots is that the communication between the Internet user and the Internet bot is limited to a one-on-one communication between an Internet user and the Internet bot. The one-on-one character of the communication between an Internet user and an Internet bot is a limiting factor in situations where several Internet users intend to communicate to each other.

### AIM OF THE INVENTION

It is an object of the invention to eliminate the drawbacks of the prior art and to provide a method for facilitating the communication between at least two Internet users.

### SUMMARY OF THE INVENTION

In accordance with this invention a method for transferring information between a first communication party and a second communication party via an IP based network is disclosed, the method comprising the steps of:
- triggering an Internet bot;
- selecting, via the Internet bot, the second communication party according to a profile list that is related to the first communication party;
- setting up a communications relation between the first communication party and the second communication party via the Internet bot; and
- transferring information from the first communication party to the Internet bot, and further from the Internet bot to the second communication party, whereby at least one of both said communication parties is anonymous during the transfer of information.

A method is disclosed for enabling a communication party, such as an end-user or an application, using or residing at an IP based network to on-line select and communicate to another communication party without revealing their identity. The selection of a communication party is performed by an Internet bot that is able to access a profile list comprising one or more characteristics. Also during the phase in which information is transferred between both communication parties, the identity of at least one communication party is not known to the other communication party because information is first transferred to the Internet bot and then from the Internet bot to the other communication party.

In a first aspect of the invention is disclosed that a first end-user can initiate via an Internet bot a set up of a communications relation to a selected second end-user of an IP based network. The IP based network may be the Internet or any non-public network that is based on IP technology, such as an intranet. Both end-users may use end-user equipment that may comprise computer equipment such as a personal computer or a mobile telephone that is suitable to access the mobile Internet, for instance using technologies such as i-Mode or UMTS. The end-user equipment may also comprise network access equipment such as an ADSL modem to connect the computer equipment of the end-user to the IP based network. Generally, application software resides on the computer equipment of the end-user, such as a browser application and communication software (e.g. Windows Live Messenger). However, it may also be possible that the communication software resided on a remote server and that this communication software is activated via the browser on the computer equipment of the end-user.

The selection of the second user is accomplished using a profile list that is accessible for the Internet bot. The profile list comprises one or more characteristics which may be related to the first end-user and/or the second end-user that is to be selected. For instance, a characteristic may identify in general terms who the first end-user is, e.g. the age of the first-end user or geographic information about the residence of the first end-user. It is also possible that a characteristic is a criteria with regard to the second end-user that is to be found by the Internet bot. Based on the characteristics comprised by the profile list the Internet bot (4) is able to start finding a second end-user that is on-line and that meets the characteristics comprised by the profile list. If the latter is the case, the Internet bot may accomplish a communications relation between the first end-user and the second end-user. During the set up of the communications relation both the first end-user and the second end-user are anonymous to each other.

In another aspect of the present invention at least one of the first end-user and the second end-user is anonymous during the transfer of information between both end-users. This is accomplished by transferring information from one end-user first to the Internet bot, after which the Internet bot transfers the information to the other end-user instead of directly transferring information directly between both end-users. Because only the Internet bot and not the end-user is aware of the identity of the other end-user, both end-users stay anonymous during the transfer of information. However, if one of the end-users desires, it may include information in the information that is transferred to the other end-user that reveals its identity to the other end-user. This may for instance be the case when for some reason it is not necessary anymore to stay anonymous.

The present invention may also enable applications set up a communication relation and to communicate to each other while being anonymous to each other. Instead of an end-user it is then an application that uses an Internet bot to find another application to which it can communicate. The same principle may also be applied with regard to the communication between an end-user and an application.

An advantage of this is that each end-user may stop the communication at any time without having revealed their identity. This is for instance useful in relation to dating applications. It occurs that people not only want to be anonymous on the Internet before they have actually made contact with someone else but also during the communication phase that takes place after that.

Using the method according to the present invention end-users are able to find on-line another end-user that matches a number of criteria and communicate to that end-user without revealing their identity. An advantage is also that no administrative agent is required that would require a more or less complex administrative registration procedure.

### BRIEF DESCRIPTION OF THE DRAWING FIGURE

The foregoing aspects and many of the attendant advantages of this invention will become better understood by reference to the following detailed description, when taken in conjunction with the accompanying drawing, wherein:
FIG. 1 is a block diagram illustrating an embodiment according to the present invention.
FIG. 2 illustrates an example whereby an end-user initiates a communication relation with another end-user via an Internet bot.
FIG. 3 illustrates an example whereby an Internet bot initiates a communication relation between two end-users.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

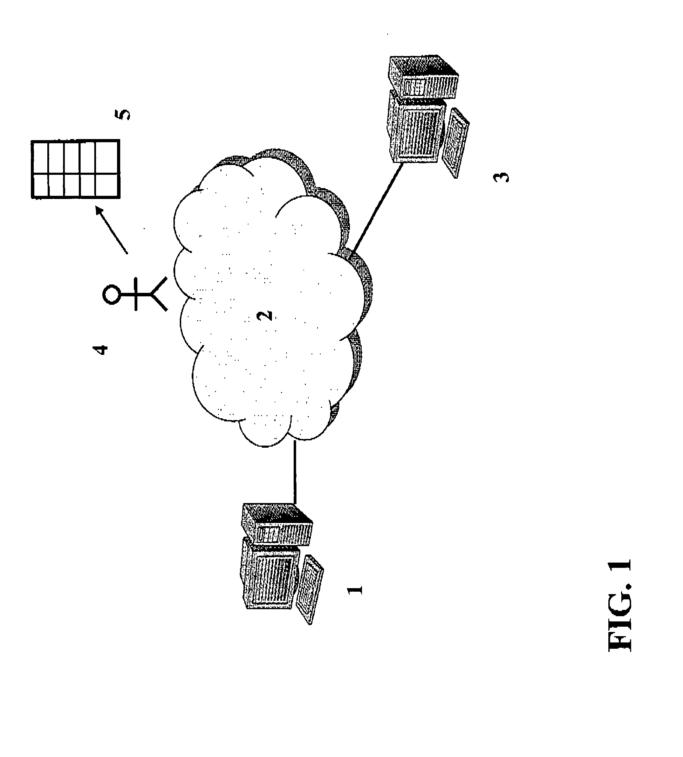

FIG.1 shows a first end-user equipment (1) of a first end-user (not depicted in the figure) that can be used by this first end-user to access an IP (Internet Protocol) based network (2). The IP based network (2) may for instance be the Internet or any non-public network that is based on IP technology, such as an intranet. The first end-user equipment (1) may comprise computer equipment such as a personal computer or a mobile telephone that is suitable to access the mobile Internet, for instance using technologies such as i-Mode or UMTS. The first end-user equipment (1) may also comprise network access equipment such as an ADSL modem to connect the computer equipment of the first end-user to the IP based network (2). Generally, application software resides on the computer equipment of the first end-user (1), such as a browser application and communication software. Examples of the latter are an e-mail application and software for enabling communication between Internet users such as messenger software (e.g. Windows Live Messenger).

A second end-user (not depicted in the figure) is also able to connect to the IP based network (2), i.e. by means of a second user equipment (2). It is not required that the second end-user equipment (2) comprises the same hardware and software components as the first end-user equipment (1). However, for certain applications it may be required that the same or compatible software application software is used on both end-user equipments, for instance the same messenger software should be available to both end-users in order to communicate with each other.

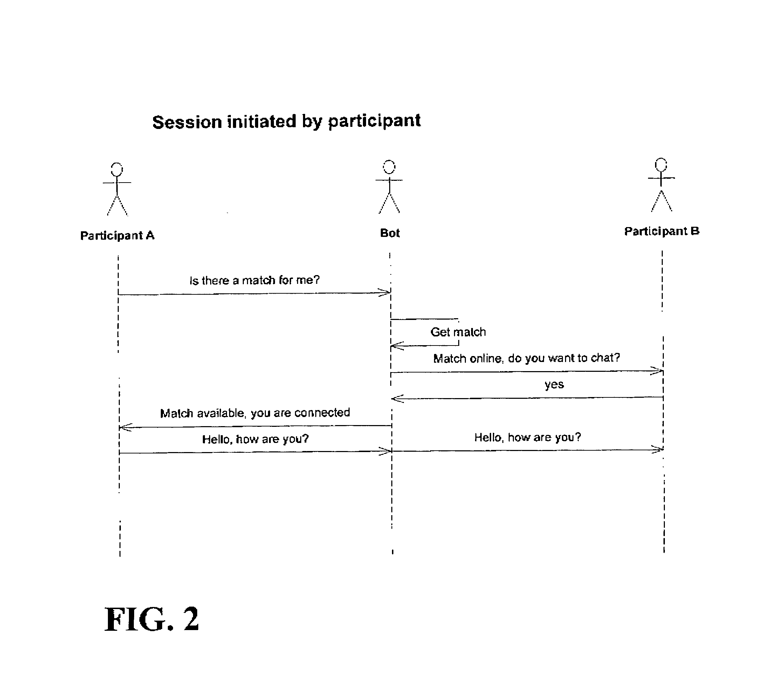

According to the present invention the first end-user is able to select an Internet bot (4), for instance by selecting the Internet bot (4) from a contact list. The latter may also be called a buddy list. Contact- or buddy lists are used in a messenger environment, enabling end-users to select other end-users or applications they want to communicate with. Selecting or invoking an Internet bot (4) by the first end-user may result in letting the Internet bot (4) notify the first end-user that the Internet bot (4) is ready to assist the first end-user in his communications needs. For instance, the Internet bot (4) may send a message to the first end-user such as "Good morning end-user x, how can I help you?". The first end-user may then send a message to the Internet bot (4) in which a request is formulated. This is depicted in FIG 2., where it is the first end-user that initiates a communication relation with the second user.

For the Internet bot (4) there is a profile list (5) accessible that comprises one or more characteristics. These characteristics may relate to the first end-user or to the second end-user. For instance, a characteristic may identify in general terms who the first end-user is (e.g. the age of the first-end user or geographic information about the residence of the first end-user). It is also possible that a characteristic is a criteria with regard to the second end-user that is to be found by the Internet bot (4). Based on the characteristics comprised by the profile list (5) the Internet bot (4) is able to start finding a second end-user that is on-line and that meets the characteristics comprised by the profile list (5). If such a second end-user is found by the Internet bot (4), the Internet bot (4) may send a message to the second end-user to ask if the second end-user agrees to communicate with the first end-user. For this, the Internet bot (4) may use in this message one or more characteristics comprised by the profile list (5) that relate to the first end-user. In this way the second end-user can decide if he or she is willing to communicate to the first end-user. If this is the case, the Internet bot (4) will accomplish a communications relation between the first end-user and the second end-user.

According to the present invention both the first end-user and the second end-user are anonymous to each other during the set up of the communication and during the course of the communication between both end-users. The latter is accomplished by transferring information during the communications phase from one end-user first to the Internet bot (4) instead of directly transfer the information to the other end-user. Because only the Internet bot (4) and not the end-user is aware of the identity of the other end-user, both end-users stay anonymous during the information transfer phase.

An advantage of this is that each end-user may stop the communication at any time without having revealed their identity. This is for instance useful for dating applications. It occurs that people not only want to be anonymous on the Internet before they have actually made contact with someone else but also during the communication phase that takes place after that. During the communication phase both persons try to find out if there really is a match with the other person. If it turns out that this is not the case, although a number of characteristics matched in first instance, a person would like to stop the communication and desires not to be approachable anymore at a later moment. The latter could e.g. prevent Internet stalking.

Using the method according to the present invention end-users are able to find on-line another end-user that matches a number of criteria and communicate to that end-user without revealing their identity. An advantage is that no administrative agent is required that would require a more or less complex administrative registration procedure.

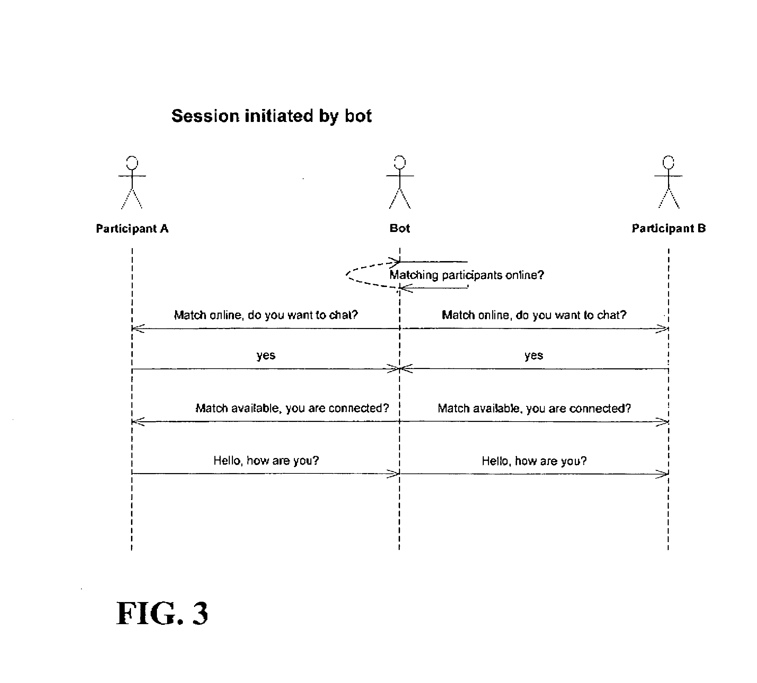

According to the present invention it is also possible that the Internet bot (4) initiates a communication relation between the first end-user and the second end-user, which is depicted in FIG. 3. A trigger for the Internet bot (4) may be a change in the status of one of the end-users, for instance if the status changes from off-line into on-line.

## Claims

1. A method for transferring information between a first communication party and a second communication party via an IP based network (2), the method comprising the steps of:
- triggering an Internet bot (4);
- selecting, via the Internet bot (4), the second communication party according to a profile list (5) that is related to the first communication party:
- setting up a communications relation between the first communication party and the second communication party via the Internet bot (4); and
- transferring information from the first communication party to the Internet bot (4), and further from the Internet bot (4) to the second communication party, whereby at least one of both said communication parties is anonymous during the transfer of information.

2. Method according to claim 1, whereby a communication party is an end-user.

3. Method according to claim 1, whereby a communication party is an application.

4. Method according to claim 1, 2 or 3, whereby the triggering of the Internet bot (4) is performed by sending a request from the first communication party to the Internet bot (4).

5. Method according to claim 1, 2 or 3, whereby the triggering of the Internet bot (4) is performed by a change in the status of one of the communication parties from off-line into on-line.

6. Method according to any of the preceding claims, whereby the first communication party and the second communication party are anonymous during the transfer of information.

7. Method according to any of the preceding claims, whereby the profile list (5) comprises a characteristic of the first communication party.

8. Method according to any of the claims 1 to 6, whereby the profile list (5) comprises a characteristic for selecting the second communication party.
